# EUROPEAN PATENT APPLICATION

(11) **EP 4 303 434 A1**
(43) Date of publication of application: **10.01.2024**
(21) Application number: 22178668.4
(22) Date of filing: 06.04.2022
(51) Int. Cl.: F03D 17/00

(54) **METHOD FOR MONITORING, LOCALIZING AND PROVIDING ALARM WHEN CRACKS ARE OBSERVED IN WIND TURBINE BLADES**

(62) Divisional of application: 22166928.6
(71) Applicant: Ventus Engineering GmbH, 1110 Vienna (AT)
(72) Inventor: MINGALIEV, Shavkat, 1010 Vienna (AT); LÜBKER, Poul Anker Skaarup, 6340 Baar (CH); TOLRON, Xavier, 1150 Vienna (AT)
(74) Representative: Patrade A/S

(57) **Abstract**

A method (2000) for identifying a blade crack (24) in a blade (16) for a wind turbine generator (WTG), the method (2000) comprises steps of
- measuring (200) sensory data (80) of at least one position sensor (20) positioned radially along the blade (16);
- identifying (2100) blade cracks (24) using the sensory data (80).

## Description

### Field of the Invention

The present invention relates to a method for determining wake conditions at a wind turbine generator, control system for determining wake conditions and a wind turbine generator capable of determining wake conditions at said wind turbine generator.

The present invention further relates to a method for calibrating a wake model for determining wake conditions at a wind turbine generator type.

Modern wind turbines are fatigue critical machines that are typically used to produce electrical power from the wind. The materials used to construct these machines are subjected to a unique loading spectrum with a number of cycles that is several orders of magnitude larger than other fatigue critical structures, e.g., an airplane.

This invention further relates to a data processing unit monitoring position sensor data for monitoring wake condition and for sending an alarm and/or a stop order as a function of defined thresholds being exceeded, thereby preventing a wind turbine to exceed a unique pre-defined loading spectrum.

Another invention relates to a method for monitoring for identifying and localizing a crack seen as a peak acceleration in a blade for a wind turbine generator (WTG). The method enables the forwarding of an alarm and/or a stop order of the wind turbine in time, thereby preventing a minor blade structural damage to develop further which may ultimately end in the blade breaking apart. Furthermore, being able to localize an area of crack origin will also minimize time needed for manually inspecting one or more blades in case of a crack.

The other invention further relates to a data processing unit monitoring position sensor data for identifying cracks and for sending an alarm as a function of defined threshold values.

### Background of the Invention

There are many different factors, which determines the power output of wind turbine generator. One factor is wake at the wind turbine generator. The wake is in part typically due to an upstream wind turbine generator or another obstacle like mountainous terrain, a building, or a forest, which generate turbulence in the air. The downstream wind turbine generator will, due to the wake, generate less power compared to a situation without wake, i.e., the wake causes a power deficit. Furthermore, the wake will cause vibrations in the rotor which increases wear.

The wake primarily causes a power deficit of a WTG at wind speeds between cut-in wind speeds and up to wind speed at rated power. In other words, a power deficit is less expected at wind speeds higher than when rated power is reached.

It is well known that the wake can be reduced by adjusting the upstream wind turbine generator. This will cause a power loss at the upstream wind turbine generator, however the downstream wind turbine generator will have the opportunity to more than compensate the power loss at the upstream wind turbine generator, such that the overall power generation of both wind turbine generators is increased.

It is well known that LiDARs can be used for measuring wake at a wind turbine generator, however LiDARs are expensive and require a lot of data processing and maintenance. Thus, there is a need for another solution to determine wake conditions at a wind turbine generator.

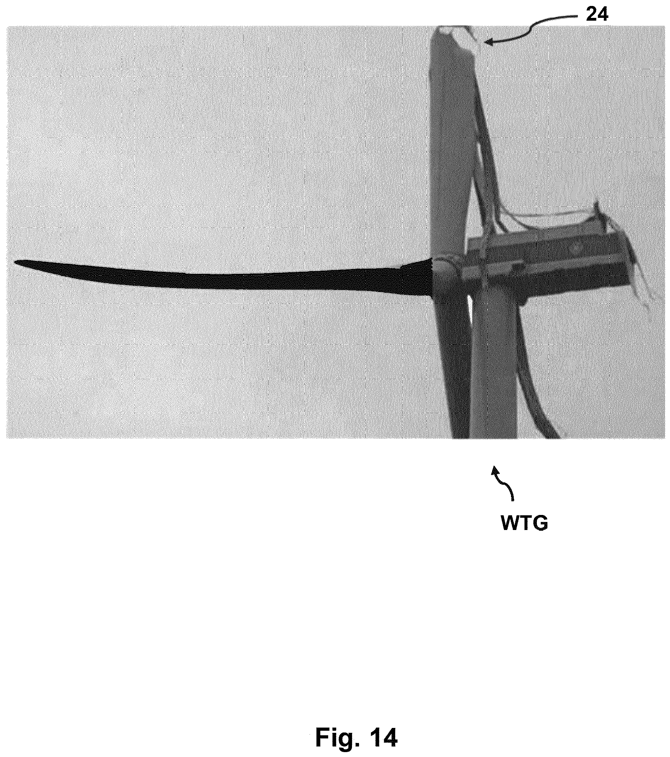

Another problem within the field of wind turbines is that blades can break apart due to design failures and structural damages which at an early stage can be seen as cracks in the blade structure. How to identify, monitor, and localize design failures and structural damages in blades on operating wind turbine generators is yet to be solved. See figure 14 showing a wind turbine generator with a broken blade - the image was taken from an article written January 2022. In such a case, typically, all wind turbine generators in the entire wind farm, which may comprise of more than 10 wind turbine generators, must all be stopped until the root cause for the blade damage is identified. Since the root cause for the blade break may also be present in the other wind turbines using the same type of blades. These wind turbines will therefore typically be stopped until the root cause for such a damage has been identified. This will result in lost revenue, and potentially all blades in the specific wind farm, and other wind farms where the same type of blades are installed, must be manually checked using for example ultrasound, i.e., leading to significant increase in inspection and maintenance costs.

### Object of the Invention

It is an object to provide a method and a control system for determining wake conditions, where the determined wake conditions can be used for protecting the individual wind turbine generator for too high loads outside design specifications which potentially will damage the blades and/or reduce expected lifetime for the blades, and furthermore this information can be used for controlling a wind turbine farm with an aim to optimize power production.

It is an object to provide a method for calibrating a wake model for determining wake conditions at a wind turbine generator type.

It is another object to provide a method for how to identify, monitor and localize structural damage and cracks in a blade of an operating wind turbine generator, this in order to set relevant thresholds and to be able to provide alarm and/or stop the wind turbine in time preventing a smaller structural damage in a blade in developing further and ultimately leading to catastrophic failures like the blade breaking a part. Being able to approximately localize the area of crack origin will also minimize the need for manually inspecting one or more blades in case of a crack, which is seen by this invention as a peak acceleration in a blade.

### Description of the Invention

An object of the invention is achieved by a method for determining wake conditions at a wind turbine generator (WTG). The wind turbine generator comprises a blade, said blade comprising at least two position sensors, and the at least two position sensors are positioned radially along the blade. The method comprises the steps of:
- measuring sensory data of the at least two position sensors during operation,
- time stamping and time synchronizing the sensory data collected by the at least two position sensors,
- receiving a rotation speed of the wind turbine generator and/or a wind speed,
- computing blade behaviour as a function of the at least two position sensors,
- determining wake conditions at the wind turbine generator as a function of the blade behaviour and the rotation speed or the wind speed.

A blade is not a completely rigid element, and any blade will bend and twist or have other blade motions in part due to wind speed and/or wake conditions. This will throughout the application be called blade behaviour as it is not necessary to identify whether the blade bends or twist or have other blade motions in order to determine wake conditions.

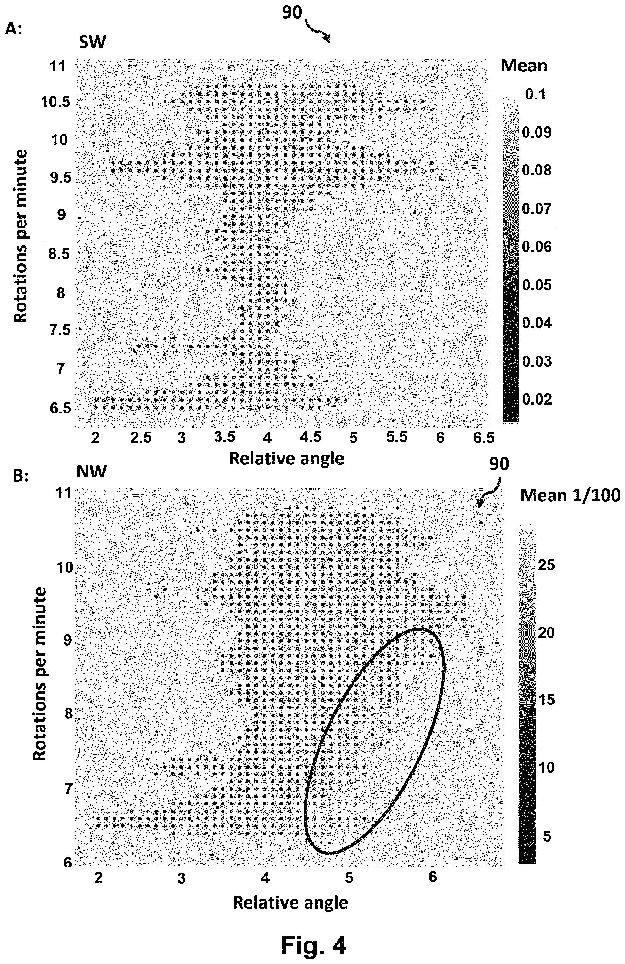

The blade behaviour will cause the at least two position sensors to move relative to each other. A greater relative movement will be due to a greater bend or a greater twist. The greater bending may be due to high wind speeds or due to wake. Figure 4 discloses measurements where the first axis is a relative position between two position sensors and the second axis is the wind turbine's rotor rotations per minute, i.e., rotation speed. Figure 4A shows data measured along a wind direction without wake, and figure 4B shows data measured along a wind direction with wake due upstream wind turbine generators. Figure 4B shows a much broader spectrum at low rotation speeds and this increased spectrum is due to wake. Thus, a person could perform the step of determining wake conditions using figure 4 provided that the person receive information about blade behaviour and rotation speed.

It is common practise within this field to determine rotation speed of the wind turbine generator.

The method for determining wake conditions is also a more direct measurement of how the wake conditions affect the wind turbine generator compared to the prior art, since the wake condition will cause bending and twisting of the blades, which also means higher mechanical loads applied to the blade structure. A LiDAR will be able to the measure degree of turbulence in front of the wind turbine rotor and the blades by measuring the inflow of wind in front of the rotor. However, the LiDAR will not be able to measure the actual wake hitting the rotor and determine the actual effect of wake on the blade and the rotor of the wind turbine generator. The present invention will be able to measure the actual wake hitting the rotor and determine the actual effect of wake on the blade and the rotor of the wind turbine generator.

The step of receiving a rotation speed of the wind turbine generator and/or a wind speed may be received by external measurements of the wind speed or from one or more sensors being part of the wind turbine generator, such as but not limited to an accelerator in the rotor measuring the rpm.

The step of time stamping and time synchronizing the sensory data is to ensure that the sensory data at least two position sensors during operation can be used in the step of computing since the blade behaviour is computed comparing the relative position i.e. the sensory data between the at least two position sensors. If the sensory data is not time stamped and time synchronized, then the method may compare sensory data 1 hour apart and this cannot be used in the present method.

In an aspect, the at least two position sensors may comprise at least two accelerometers, wherein the sensory data from the at least two accelerometers are used for computing blade behaviour.

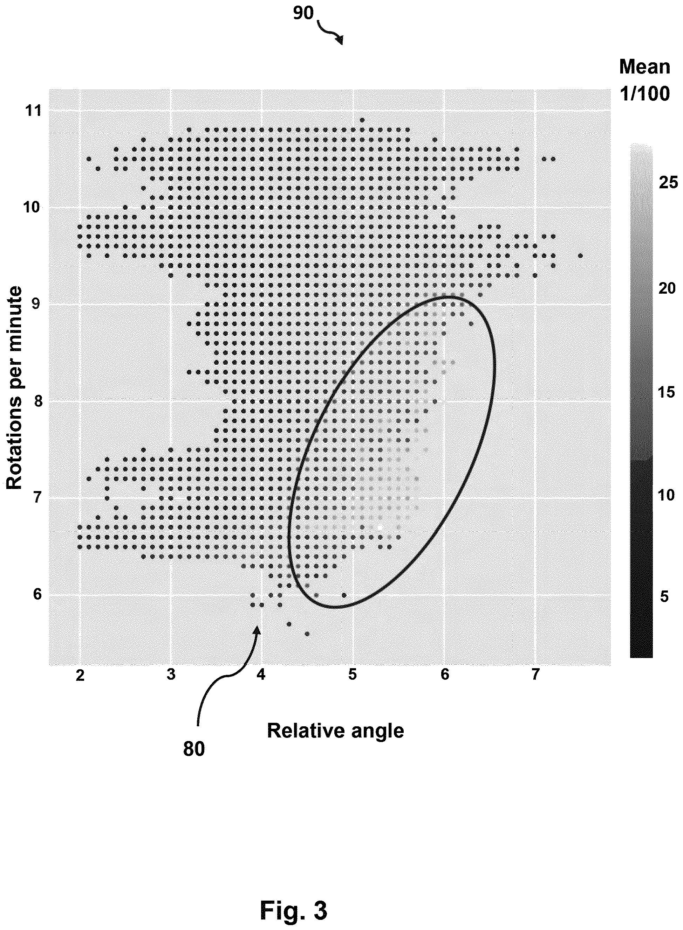

Tests have shown that data from accelerometers are excellent when performing the step of computing the blade behaviour as the data can be computed with simple calculations, such as a simple angle as shown in figures 3-5.

An accelerometer may be part of each position sensor or each position sensor may be an accelerometer.

A two-axis accelerometer is sufficient for determining wake conditions. The graph in figures 3-5 are based on two axis data from two accelerometers and it is sufficient to determining wake conditions.

However, the accelerometer may be a three-axis accelerometer as this provides more data and the measured data is independent of the orientation of the three-axis accelerometer.

The accelerometers will, when in installed in a blade, have an orientation which is defined by the direction of the axis of accelerometers. This orientation will change during use due to rotation of the blade but also due to bending and/or twisting of the blade i.e. due to blade behaviour. This can be determined since gravitation is oriented towards the centre of the Earth, and the angular acceleration is perpendicular to the rotation of the blade. Thereby, a change in orientation can be computed.

Typically, the axis of the accelerometers will be installed, such that the axis of the accelerometers is in the same directions as this will reduce the needed computation power.

Thus, the step of computing the blade behaviour can be computed by comparing how the axis of the accelerometers change relative to each other as a greater change will be due to a greater bending and/or twisting of the blade.

In an aspect, the at least two accelerometers may be operating at a sampling rate
- equal to or greater than 128 Hz or
- equal to or greater than 256 Hz.

Tests have shown that the sampling rate of the accelerometers should increase with the distance in between the accelerometers. In the test, which resulted in the graphs shown in figures 3-5, it was sufficient to sample at a rate of 128 Hz, however a test showed that a 64 Hz sample rate could not be used.

It is expected that with the ever-growing size of wind turbine generators it will be necessary to have a sampling rate equal to or greater than 256 Hz.

In an embodiment, the at least two position sensors may be positioned radially along the blade with a distance equal to or greater than 10 m, or 15 m, or 20 m, or 25 m, or 30 m. In some cases, a blade may have a position sensor every 5 m. This is within the scope of the invention since the first position sensor and the third position sensor are at a 10 m distance.

In an aspect, the step of computing may be performed by an act of comparing relative changes between the at least two position sensors.

The act of comparing relative changes decreases the necessary computation power needed and the relative change has in tests proven to be sufficient to determine the wake conditions.

The bending and twisting of the blade can be detected more easily as the distance between the two position sensors increase as there will be a larger part of the blade between the two position sensors, which can twist and/or bend. The optimal position of the at least two position sensors can be determined through testing.

In an aspect, the wind turbine generator (WTG) may comprise one, two, three, or more blades, where the one, two, three, or more blades comprise at least two position sensors, and where the at least two position sensors are positioned with a sensor distance radially along the one, two, three, or more blades.

Thereby, the amount of data is increased, and the risk of outliers are reduced significantly as each blade comprising at least two position sensors is used for calculating wake conditions at the wind turbine generator (WTG).

In an aspect, the sensory data from the at least two accelerometers may be converted to a relative point angle.

The relative point angle comparison is simple and requires little computational power, and the relative point angle can easily be compared to a reference or be used for computing a change as a function of time.

There may be two or more relative point angles between different axis and/or planes defined by the axis.

The reference may be a relative point angle or relative point angles when the blade is at rest.

In an aspect, the step of computing blade behaviour may involve spectral analysis of the sensory data, statistical analysis of the sensory data, pattern recognition of the sensory data, or analysis by way of machine learning or supervised algorithm on the sensory data.

This will further increase the value of the computed blade behaviour as it will enable hidden patterns to be found.

An object of the invention is achieved by a data processing unit for determining wake conditions at a wind turbine generator (WTG), the data processing unit comprising
- a communication module adapted for communication with at least two position sensors (201, 2011) positioned radially along a blade (16) of a wind turbine generator (WTG), and
- a computation unit adapted to execute the steps of the method for determining wake conditions at a wind turbine generator (WTG).

Thereby, the control system can determine wake conditions at a wind turbine generator using the blade or blades of the wind turbine generator. Thereby, the rotor of the wind turbine generator becomes a very large wake detector.

The communication module may be adapted for communication with a wind speed sensor for receiving a wind speed at the wind turbine generator.

The data processing unit may be part of the wind turbine generator or be external to the wind turbine generator.

Each of the two position sensors may comprise an accelerometer or may be an accelerometer.

In an aspect, the communication module may be in wired or in wireless communication with at least two position sensors.

The at least two position sensors are positioned radially in the blade and wireless communication will be somewhat simpler than a wire and connection points extending from a hub or nacelle to a rotating blade. However, if the data from the at least two position sensors is to be used for controlling the WTG then the present regulations require the communication to be wired.

In an aspect, the data processing unit may be configured to send an alarm or a stop signal to a wind turbine generator or an operator as a function of wake threshold value. The wake threshold value may be set based on design of the wind turbine generator or by an operator of the wind turbine generator. The operator may set the wake threshold value such that the expected lifetime of the wind turbine generator is 20 years, or 25 years, or 30 years.

Thus, in the case where the wind turbine generator is experiencing a wake above the threshold value then the wind turbine generator is stopped or restricted in operation to reduce wear.

In an aspect, the data processing unit may be configured to send and/or present actual wake data and historical wake data for a wind turbine operator to be able to compare present and past wake situation.

An object of the invention is achieved by a wind turbine generator (WTG) comprising
- a blade comprising at least two position sensors, where the at least two position sensors are positioned radially along the blade,
- a data processing unit as previously described.

Thereby, the wind turbine generator will be able to determine wake conditions by computing the blade behaviour of the blade of the wind turbine generator. It is only necessary that one blade comprises at least two position sensors, however all blades may comprise at least two position sensors.

The position sensors may be accelerometers. Accelerometers are readily available today and are compared to LiDARs much cheaper and the accelerometers will collect data of how the wind affects the blade instead of just the approaching wind which can be monitored by a LiDAR or a met mast.

An object of the invention is achieved by a wind turbine park comprising a plurality of wind turbine generators, wherein
- at least one of the plurality of wind turbine generators is a wind turbine generator as previously described having a data processing unit; and/or
- the wind turbine park comprises a data processing unit as previously described in communication with at least two position sensors on a blade of a wind turbine generator.

Thereby, the local wake conditions on a blade can be determined.

In an embodiment, 2, or 5, or 10, or 20, or 50, or all the plurality of wind turbine generators, are wind turbine generator as previously described having a data processing unit, thereby each of these wind turbine generators can be used for mapping the wake conditions of the wind turbine park.

In an embodiment, the data processing unit is in communication with a plurality of blades on different wind turbine generators, where each of the plurality of blades comprises at least two position sensors positioned radially along the blades. The plurality of blades may be 5 blades, 10 blades, 20 blades, or 50 blades, or more blades, or all blades of the wind turbine park. Thereby, each of these blades can be used for mapping the wake conditions of the wind turbine park.

In an embodiment, each wind turbine generator of a plurality of wind turbine generators comprises a blade comprising at least two position sensors positioned radially along the blade and the data processing unit is in communication with the position sensors thereby enabling mapping the wake conditions of the wind turbine park.

In an aspect, wherein the data processing unit may further be configured to control one or more of the wind turbine generators of the wind turbine park as a function of the wake conditions of the least one of the wind turbine generators.

The power loss due to wake can be severe and, in many cases, the upstream wind turbine generator or generators can be perturbed, which will lead to a power loss of the upstream wind turbine generator or generators, however the power loss is more than compensated by the increased power of the downstream wind turbine generator.

An object of the invention is achieved by a method for calibrating a wake model for determining wake conditions at a wind turbine generator type. The method comprises the following steps:
- providing a wind turbine generator comprising
   a blade comprising at least two position sensors, where the at least two position sensors are positioned along the blade, and
   a LiDAR for measuring turbulence, and/or
   position data of surrounding wind turbine generators;
- measuring sensory data of the at least two position sensors during operation,
- time stamping and time synchronizing 210 the sensory data 80 collected by the at least two position sensors 201, 2011;- measuring turbulence using the LiDAR during operation and/or measuring wind at the wind turbine generator,
- determining a rotation speed of the wind turbine generator,
- computing a blade behaviour as a function of the at least two position sensors,
- calibrating a wake model for calculating wake conditions of the wind turbine generator as a function of the blade behaviour, the rotation speed and the measured turbulence and/or the wind direction coupled to the position data of the surrounding wind turbine generators.

The step of measuring wind at the wind turbine generator will include both wind direction and wind speed.

The method for calibrating a wake model for determining wake conditions at a wind turbine generator type will be faster using a LiDAR compared to coupling wind direction to the position data of the surrounding wind turbine generators. The result will however be similar and a LiDAR is not mandatory.

The method enables calibration of any wind turbine generator type such that any wind turbine generator type can be used for measuring wake.

In an aspect, the at least two position sensors comprise at least two accelerometers, wherein the sensory data from the at least two accelerometers are used for computing blade behaviour.

In an embodiment a sensor distance between the two position sensors is equal to or greater than 10 m, or 15 m, or 20 m, or 25 m, or 30 m.

An object of the invention is achieved by a method for identifying a blade crack in a blade for a wind turbine generator. The method comprises steps of
- measuring sensory data of at least one position sensor positioned radially along the blade;
- identifying blade cracks using the sensory data.

A crack in a blade is similar to an "earthquake" in the blade structure, and typically the crack can be heard by a person if the person is near the blade at the time of the formation of the crack, since there is a relatively large energy release. A person will very rarely be close enough to the blade, even when the blade is installed on an onshore wind turbine generator, to hear the crack. Furthermore, a single minor crack typically does not indicate a problem in the blade structure, however if cracks happen often and/or at an increasing rate or magnitude, then it indicates something unusual is going on in the blade structure which may lead to a catastrophic failure such as blade fracture or a blade collapse. If blade fracture or blade collapse occurs at a wind turbine farm, then typically all wind turbine generators will have to be stopped until the root cause for the crack is identified, and in many cases each blade of the wind turbine generators will need to be checked looking for the same root cause for these cracks, and in some cases also blades in other wind farms where the same blade type of blade have been installed must be checked for the same root cause. This is a very labour-intensive manual procedure where each blade is checked using for example ultrasound. The time needed for a person to check one blade on a large wind turbine generator is roughly a week.

If a crack happens, then the at least one or more position sensor will register a high peak acceleration for a brief moment as the wave travels though the blade. Thus, it is relatively easy to monitor and identify a crack since the at least one position sensor must register a high peak acceleration. When only one position sensor is installed in a blade then it will not be possible to localise a crack to a more specific position in the blade. This is still an improvement over the prior art as it is important to know which of the three blades that has generated a crack, and/or in case of wind turbine farm with a plurality of blades, knowing in which blades cracks have been observed. It is highly likely that if a blade is to break apart, then it will be in one of the blades where one or more blade cracks have been detected.

Thus, by performing this method, it will be possible to identify blades where something unusual is going on in the blade structure which may lead to a catastrophic failure later on, such as blade fracture or a blade collapse, and by identifying a blade which should be checked then it is possible to change the blade or perform blade repair early on to reduce blade repair costs and later having the risk of very expensive catastrophic blade failures.

The at least one position sensor may be an accelerometer. The accelerometer may be a one-axis accelerometer or a two-axis accelerometer or a tri-axis accelerometer. Even in the case where the single axis accelerometer is perfectly perpendicular to the wave generated by a crack, there will still be a large signal thus only a single-axis accelerometer is needed. Thus, even in the scenario where the single-axis accelerometer is positioned in the worst possible position, it would still be able to detect the crack. However, in many embodiments two- or tri-axis accelerometers are used since more sensory data improves the method.

In another embodiment, a method for localising impacts in a blade for a wind turbine generator. The method comprises steps of
- measuring sensory data of at least one position sensor positioned radially along the blade;
- identifying blade impacts using the sensory data.

The blade impact may be an internal impact such as a crack in the structure of the blade.

The blade impact may be an internal impact such as a loose object moving inside the blade. In case of a loose object, then there will be a periodic signal pattern which will move between the root and the tip of a blade since the loose object will move back and forth as the rotor rotates. This signal pattern will be significant different than a blade crack.

The blade impact may be a bird or a bat impacting the blade.

Thus, the method and the position sensor may be used for measuring additional elements.

The step of measuring sensory data may include at least two position sensors positioned radially along the blade, such as at least five position sensors, or at least ten position sensors, or at least fifteen position sensors. In case where the method utilises two or mor position sensors then the sensory data must be time stamped and time synchronized. This will simplify identifying loose objects moving inside the blade as there will be impacts along the blade moving back and forth as a function of the radial position of the blade.

A bat or bird is expected to give a single signature with a low signal amplitude compared to a blade crack.

In an aspect, the method is adapted for estimating an area of crack origin, wherein the blade may comprise at least two position sensors positioned radially along the blade and the method comprises a step of
- time stamping and time synchronizing the data collected by the at least two position sensors;
- estimating an area of crack origin, where the blade crack happened, as a function of the sensory data.

When using more than one position sensor for crack detection and localisation, the data sampling must be time-stamped and data from the position sensors must be time synchronized. The wave propagation speed in a blade may be 350 m/s to 400 m/s, thus if the two accelerometers are not time synchronised, and if the offset is for example 1 second, then the uncertainty of the measurement would be larger than the length of the blade. Even a 0.25 second offset would result in an uncertainty of roughly 100 m.

If the method is performed with two position sensors, then the blade is divided into three blade sections. The blade section from where the crack originated can be identified by order of the measured peaks, and the time between the peaks is observed by the two position sensors.

Furthermore, it gets easier to identify a crack when using at least two position sensors located in the blade. It is relatively easy to identify a crack since the at least two position sensors located in the blade will register two high peaks at different times. The difference in time can be used to further localise the area of crack origin.

In theory, the two position sensors could measure two high peaks at the same time if the crack happens exactly in the middle in-between the two position sensors.

If the blade was to be investigated in greater detail, then it will only be necessary to check the blade section and estimated approximate location from where the crack originated, i.e., the downtime may be reduced significantly. If the method is performed with 3, 5, 7, 10, or 15, position sensors, then an estimated approximate location area of crack origin can be estimated even more precisely compared to only two position sensors positioned radially along the blade. The same can be achieved by increasing the sampling frequency of the two position sensors. Higher accuracy in estimating the approximate location area of crack origin can also be achieved by increasing both the sampling frequency and the number of position sensors installed in the blade.

The step of estimating an area of crack origin may further include an estimation of the wave propagation speed in the blade. This wave propagation speed may be based on tapping tests performed at a similar blade, on a similar blade located in a test rig, on a similar blade installed on a wind turbine generator or on the specific blade installed on a wind turbine generator. Thereby, the method will be able to reduce the estimated approximate location area of the crack origin significantly. In the case that the method is performed with 3, 5, 7, 10, or 15, position sensors, it is further possible to perform a step of triangulating the area of crack origin such that the area can be reduced even further. If higher accuracy is needed in estimating approximate location area of crack origin this can also be achieved by tapping test for estimation of the actual wave propagation speed in the specific blade and increasing both the sampling frequency and also the number of position sensors installed in the blade.

The tapping test may be performed on the inside of the blade and the tapping test may be performed radially along the parts of the blade or the entire blade.

In an aspect, the method may further comprise steps of
- repeatably storing a timestamp of the blade crack, the area of crack origin of the blade crack and sensory data of the blade crack, thereby forming a blade crack sequence;- estimating the blade crack sequence () relative to one or more threshold values; and
- sending an alarm as a function of the step of estimating (2200).

The step of storing may be performed on a computer readable medium. The computer readable medium may be installed on a wind turbine generator or be part of a local or remote server. The computer readable medium will over time form a blade crack sequence which will include information of the different identified blade cracks which then can be used for estimating the blade crack sequence relative to one or more threshold values and an alarm may be sent as a function of the step of estimating.

The sensory data of the blade crack may include amplitude and the width of the blade crack signal, and the spectral composition of the blade crack signal measured by the at least two positions sensors. An operator or a data processing unit may have set threshold values for one or more of the different values of blade crack sequence i.e. such as a threshold value for the rate of blade cracks or amplitude of the blade cracks or the area of crack origin or other threshold values.

The step of estimating may involve spectral analysis of the blade crack sequence, statistical analysis of the blade crack sequence, pattern recognition of the blade crack sequence, or analysis by way of machine learning or supervised algorithm on the blade crack sequence.

A wind turbine generator is in general built to be operational for minimum 20 years before decommissioning, and the blades of the wind turbine generator will over this time deteriorate due to wear. Over the 20 years of the blade lifetime there may be formation of cracks. Again, a single crack will rarely be an indicator of a problem, however two cracks in the same area are believed to be much worse than two cracks in completely different areas. This is also one of the motivations for improving the accuracy in estimating the area of crack origin as much as possible. The increase in accuracy will improve the step of estimating the rate of blade cracks in a part of the blade.

The step of sending an alarm may also be related to a wind speed at the wind turbine generator while observing a blade crack. In this case, the wind speed needs to be timestamped and synchronized and stored together with sensory data from the position sensors detecting a blade crack, which datasets is also timestamped and synchronised.

The step of sending an alarm may also be a function of the turbulence or wake at the wind turbine generator while observing crack. The turbulence or wake may be monitored and measured using the method according to any one of claims 1-7. In such a case, the turbulence data measured need to be timestamped, time synchronized and stored together with data from the position sensors with the same timestamp as that of the blade crack.

The step of sending an alarm may further be a function of magnitude of the crack measured at one or more position sensors. The peak acceleration observed will depend on the magnitude of the crack and on the distance from the crack to the position sensor, thus the magnitude of the crack can be estimated more precisely using several position sensors. In such a case, the data for estimating the magnitude of the crack measured needs to be timestamped, and time synchronized and stored together with data from the position sensors with the same timestamp as of the blade crack.

The step of generating and sending an alarm may further be a function of the rate of blade cracks measured and observed at one or more position sensors. In such a case, the data for estimating the rate of blade cracks needs to be timestamped, time synchronized, and stored, together with the sensory data from the position sensors, the sensory data are likewise timestamped, and time synchronized.

There may further be a step of estimating the magnitude of the blade cracks and the step of sending the alarm may further be as a function of magnitude of the blade cracks.

A wind turbine generator or a blade located in a test rig may react to the alarm by stopping the rotation of the rotor or stopping the testing of the blade located in a test rig.

In an aspect, the method may be performed while a blade test rig performing steps of mechanically stressing the blade.

While located in the blade test rig, the blade will be mechanically stressed. The mechanical stress performed by the test rig will in most test be equivalent to estimated wear seen over a 20-year lifetime. The method will be able to measure the magnitude, sequence and number of cracks formed during the stress testing procedure and will be able to estimate the area of crack origin for each crack. These areas of crack origin may then be further investigated with ultrasound, and/or x-rays, and/or tapping tests, or other relevant methods. It is believed that design weaknesses, errors and/or production errors can be identified earlier by performing the method while a blade is located in a test rig performing steps of the mechanically stressing the blade.

Thereby, design weaknesses and errors can be modified before mass production of a specific blade type.

In an aspect, the method may be performed on a wind turbine generator comprising the blade during operation.

If there is a catastrophic blade failure and the blade breaks, then there is a great health and safety risk and normally the entire wind turbine farm must be stopped until root cause is identified, and all blades of the wind turbine farm have to be investigated. In some cases, other wind turbine farms, where the same type of blades are installed, must also be stopped until the root cause is identified.

Thus, the method for estimating an area of crack origin enables cracks, areas of crack origin, magnitude of the blade crack and rate of blade cracks to be identified and monitored. The identification and monitoring enable that threshold values can be set and an alarm can be sent as a function of these threshold values. An operator may then make a decision regarding the continued operation of the specific wind turbine generator. Since this method protects the individual wind turbine against catastrophic blade failures, then wind turbine generators, where this method is applied, are not required to stop production, while one of the wind turbine generators is stopped for further investigation due to blade cracks exceeding the defined thresholds.

Thus, the method reduces the risk of stop of operation and production losses significantly. The reduction in risk and production loss is greater as the number of wind turbine generators and blades increase.

The method may be performed on one, two, or all blades of the wind turbine generator. The method may in addition be performed on one, two, 5, 10, 20, 40, 80, or 90% of all the wind turbine generators in a wind turbine farm, or on all 100% of the wind turbine generators in the wind turbine farm. Thereby, the wind turbine generator can be stopped before blade structural damage develops into a catastrophic blade failure.

In an aspect, at least one or two position sensors may comprise at least one or two ac-celerometers.

The at least two position sensors may be accelerometers, however the position sensors may include additional sensors such as gyroscopes.

To perform the method, the accelerometer is only required to measure acceleration in any random direction, since the purpose is to measure the way travelling through the blade and this way will give a very high signal in any direction. However, a two-axis accelerometer or three-axis accelerometer can be used with the added effect that it decreases the risk of false positives, since the accelerometer should measure a high peak value along all axes at the same time.

In an aspect, the at least two accelerometers may comprise a sampling rate equal to or above 256 Hz, or equal to or above 512 Hz, or equal to or above 1 kHz, or equal to or above 2 kHz, or equal to or above 4 kHz, or equal to or above 8 kHz.

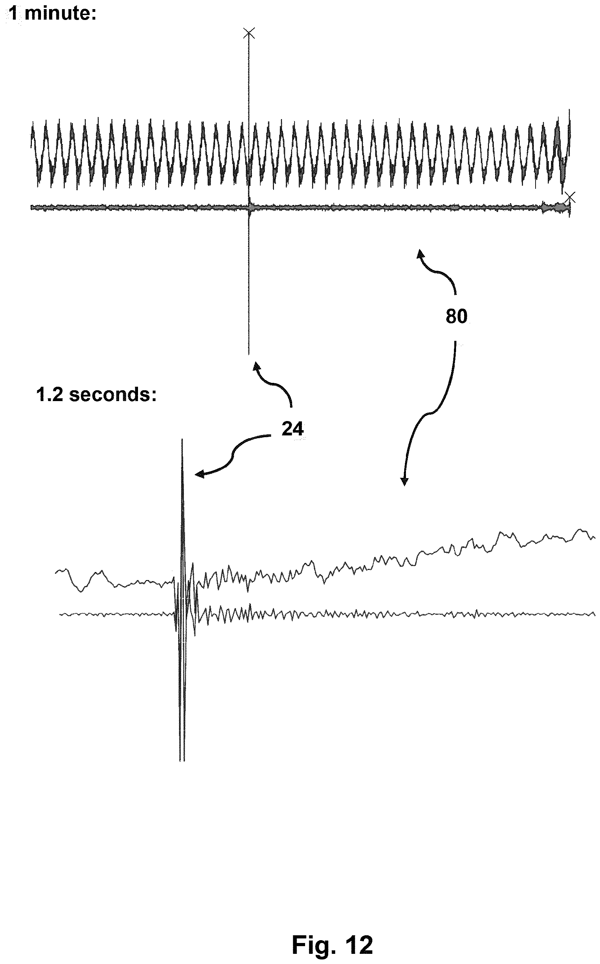

The data shown in figures 12-13 was measured on an accelerometer with a sample rate of 256 Hz, and the sample rate is sufficient to register cracks. However, there is a correlation between the sampling rate and the accuracy in defining the size of the area of crack origin for the same number of accelerometers. The accuracy in defining the size of the area of crack origin can therefore be increased by increasing the sampling rate.

In addition, the accuracy in defining the size of the area of crack origin can also be reduced by increasing the number of accelerometers positioned radially along the blade and by this reducing the distance in between the accelerometers installed in the blade.

In addition, if tapping tests have been performed on the specific blade or a similar type of blade then the wave propagation speed is known and the area of crack origin can be reduced even further.

Datasets from the at least two accelerometers are timestamped and time synchronized.

The step of estimating an area of crack origin may involve spectral analysis of the sensory data, statistical analysis of the sensory data, pattern recognition of the sensory data, or analysis by way of machine learning or supervised algorithm on the sensory data.

The machine learning or supervised algorithm on the sensory data may at least partly be based on tapping impact tests performed on a blade of the same type.

The wave propagation speed through a blade may vary depending on the material used and macroscopic design such as the shape, but also the microscopic design such as the layers of the blade. There may even be differences from blade to blade due to tolerances in production. There may be other factors. Therefore, a tapping impact test during the installation of the position sensors in the specific blade will be advantageous to identify more precisely the wave propagation speed through the specific blade.

The wave propagation speed may be 350 m/s to 400 m/s. Thus, if the sampling rate is only 256 Hz, then the wave will travel over 1 m per sampling, and therefore in general low sampling rate will limit the precision of the method.

At a sampling rate of 1 kHz, and with a wave propagation speed between 350 m/s to 400 m/s, the wave will travel less than 0.5 meters and thus the precision will increase.

The mentioned wave propagation speed may be different even for blades of the same type, and at higher wave propagation speeds, it will be advantageous for the accuracy estimating the origin of a crack if the sampling rate increases.

Datasets from the at least two accelerometers are to be timestamped and synchronized.

As previously mentioned, the wave propagation speed may be 350 m/s to 400 m/s, thus if datasets from the two accelerometers are not timestamped and time synchronised and if the offset is 1 second, then the uncertainty of the measurement would be larger than the blade. Even a 0.25 second offset would result in an uncertainty of roughly 100 m.

The same would apply for two position sensors.

In an aspect, the method may further comprise steps of
- tapping the blade whilst measuring sensory data of at least two position sensors positioned radially along the blade;
- timestamping and time synchronizing sensory data collected by the at least two position sensors;
- calculating a wave propagation speed through the blade as a function of location of the tapping, radial position of the position sensors along the blade and the sensory data from the step of tapping,
wherein the step of estimating an area of crack origin being further a function of the wave propagation speed.

The above-mentioned tapping test may be performed at a blade of the same type located on the ground, in a test rig or for higher accuracy it can be performed on the specific blade after installation of the blade on the specific wind turbine generator. The tapping test will increase the total installation time with 30 minutes or 60 minutes per blade, which will be acceptable.

The tapping tests will enable a controlled way of generating a wave propagating through the blade, which can be used for calculating a wave propagation speed for a blade type or for a specific blade.

The wave propagation speed can also be used for choosing a suitable sampling rate of the at least two position sensors or at least two accelerometers. In general, the sampling rate should increase with the wave propagation speed.

The location on the blade where the step of tapping is performed may be included when calculating wave propagation speed.

It will be an advantage if the step of tapping is repeated at the same blade location with a varied but controlled tapping force, in this way it is possible to calibrate the peak acceleration seen by the one or more position sensors.

The tapping test may be performed using a controlled process where also the intensity (force) of the tapping impact on the blade is registered - in this way it will maybe possible also to calibrate the "peak acceleration" seen by the sensor nodes.

The tapping test may be performed by tapping the position of the at least one position sensor and on each side of the at least one position sensor. In the case of two or more position sensors, the tapping test may be tapping the position of each of the two or more position sensors and on each side of each sensor, i.e., tapping between each sensor.

Thus, if the blade comprises N position sensors, then there will be performed 2N+1 tapping tests on the blade corresponding to tapping test on each of the N position sensors and between and outside the N position sensors corresponding to N+1 tapping tests.

An object of the invention is achieved by a data processing unit for localising a blade crack in a blade for a wind turbine generator. The data processing unit system comprises
- a communication module adapted for communication with at least one or two position sensors and the at least one or two position sensors are positioned radially along a blade,
- a computation unit adapted to execute the steps of the method for localising blade crack in a blade for a wind turbine generator.

The data processing unit may be adapted for localising blade crack in a blade for a wind turbine generator may be the same data processing unit as the data processing unit for determining wake conditions at a wind turbine generator. Furthermore, the blade and the position sensors may likewise be the same parts. Thus, the same data processing unit will be able to monitor both wake conditions at the wind turbine blade and blade cracks.

The same time stamped, and time synchronized data collected by the position sensors can be used by all the inventions described in the application and all invention may have the time stamped, and time synchronized data processed by the same data processing unit. The data and data processing unit can also be used to provide information about actual wind speed and actual turbulence.

A single position sensor can be used when one is satisfied by just observing a crack in a blade. This is the simplest form for localisation of crack in blade, however it will still reduce the maintenance cost relative to the prior art as a wind turbine farm will have a plurality of blades and the simple knowledge of which blades have cracks can be used to risk, health and safety situations and control the wind turbine farm to avoid catastrophic blade failures happening.

In an aspect, the communication module may be in wireless or wired communication with at least one or two position sensors.

The at least one or two position sensors are positioned radially in the blade and wireless communication will be somewhat simpler than a wire and connection points extending from a nacelle to a blade.

In an aspect, the alarm system may be configured to send a stop signal or an alarm to a wind turbine generator, or test rig, or an operator, or a service team as a function of observed blade cracks exceeding defined thresholds.

Thereby, a catastrophic blade failure can be prevented and thus health and safety is increased, and the risk of production stop of a complete wind turbine farm and wind turbines using the same blade type is decreased.

The decision to send a stop signal or an alarm may be based on the rate of cracks, the data processing unit may detect that the rate of cracks is increasing over time and the periodicity is decreasing this may indicate that a catastrophic blade failure is about to happen, or that the risk of blade breakage is too high relative to the costs of closing the entire wind turbine farm.

The decision to send a stop signal or an alarm may be based on an amplitude measured at the at least one or two position sensors as there is a correlation between the location of the origin of the crack and the measured magnitude of a crack often defining the severity of the crack. Thus, if the same position sensor over time measures an increasing amplitude at the same origin of a crack, then this may be due to the magnitude of the crack and thus the severity is increasing. This may also be due to distance between the position sensor and the origin of the crack as the wave amplitude will decrease with distance.

This can be mitigated by having two or more position sensors such as 5, 10, or 15, position sensors thereby an accumulated amplitude or an average amplitude is calculated, and thereby the position of a single position sensor relative to the crack origin will be more accurate.

In most cases, both the rate of cracks and the amplitude may be used when deciding whether to send a stop signal or an alarm. The wind speed and the turbulence may also be used when deciding whether to send a stop signal or an alarm.

An object of the invention is achieved by a wind turbine generator comprising
- a blade comprising at least one or two position sensors, where the at least one or two position sensors are positioned radially along the blade,
- an alarm system for localising blade crack in a blade for the wind turbine generator.

Each blade of the wind turbine generator may comprise at least one or two position sensors positioned radially along each of the blades.

The at least one or two position sensors may be accelerometers.

An object of the invention is achieved by a wind turbine farm comprises a plurality of wind turbine generators, wherein a plurality of blades of the plurality of wind turbine generators comprises at least one or two position sensors, where the at least one or two position sensors are positioned radially along the blade, and the wind turbine farm further comprises a data processing unit, the data processing unit being in communication with the position sensors on the plurality of blades.

Thereby, a wind turbine farm will only need a single data processing unit for monitoring, providing alarms, and keeping track of cracks in blades. However, each wind turbine generator of the wind turbine farm may comprise a data processing unit as previously described.

### Description of the Drawing

Embodiments of the invention will be described in the figures, whereon:
Fig. 1 illustrates power deficit as a function of wind speed in wake conditions;
Fig. 2 illustrates a test site of a test wind turbine generator;
Fig. 3 illustrates one year of data from the test wind turbine generator;
Fig. 4 illustrates the data from figure 3 but only from the southwest direction (A) and the northwest direction (B);
Fig. 5 illustrates points from the southwest direction (figure 4A) superimposed on the points from the northwest direction (figure 4B);
Fig. 6 illustrates a wind turbine generator
Fig. 7 illustrates a wind turbine generator with two positions sensor in each of the three blades;
Fig. 8 illustrates a blade of the wind turbine generator with two tri-axis accelerometers;
Fig. 9 illustrates two types of blade behaviour;
Fig. 10 illustrates a method for determining wake conditions at a wind turbine generator (WTG);
Fig. 11 illustrates a method (100) for calibrating a wake model for a wind turbine generator type (WTG-T) for determining wake conditions
Fig. 12 illustrates a measured acceleration signal after a crack in a blade for a wind turbine generator;
Fig. 13 illustrates different kinds of possible signals when a crack occurs;
Fig. 14 illustrates a wind turbine generator with blade failure;
Fig. 15 illustrates an example of a test rig for blades;
Fig. 16 illustrates a method 2000 for localising blade crack in a blade for a wind turbine generator.

### Detailed Description of the Invention

| **Item** | **No** |
|---|---|
| Wind turbine generator | WTG |
| Wind turbine generator type | WTG-T |
| Surrounding wind turbine generators | WTG-S |
| Tower | 10 |
| Nacelle | 12 |
| Rotor | 14 |
| Blade | 16, 16A, 16B, 16C |
| Blade section | Z1, Z2, Z3 |
| Blade behaviour | 18 |
| Position sensor | 201, 2011 |
| Accelerometer | 221, 2211 |
| Blade crack | 24 |
| Area of crack origin | 26 |
| Data processing unit | 30 |
| Communication module | 32 |
| Computation unit | 34 |
| Wind turbine park | 40 |
| Northwest | NW |
| Southwest | SW |
| Blade test rig | 50 |
| Sensory data | 80 |
| Wake condition | 90 |
| Method for determining wake conditions | 100 |
| Measuring | 200 |
| Time stamping and time synchronizing | 210 |
| Determining | 300 |
| Computing | 400 |
| Comparing | 450 |
| Calculating | 500 |
| | |
| Method for calibrating a wake model for a wind turbine generator type | 1000 |
| Providing | 1100 |
| Calibrating | 1200 |
| | |
| Method for localising blade crack in a blade for a wind turbine generator | 2000 |
| Identifying | 2100 |
| Estimating | 2200 |
| Storing | 2300 |
| Tracking | 2400 |
| Sending | 2500 |
| Tapping | 2600 |

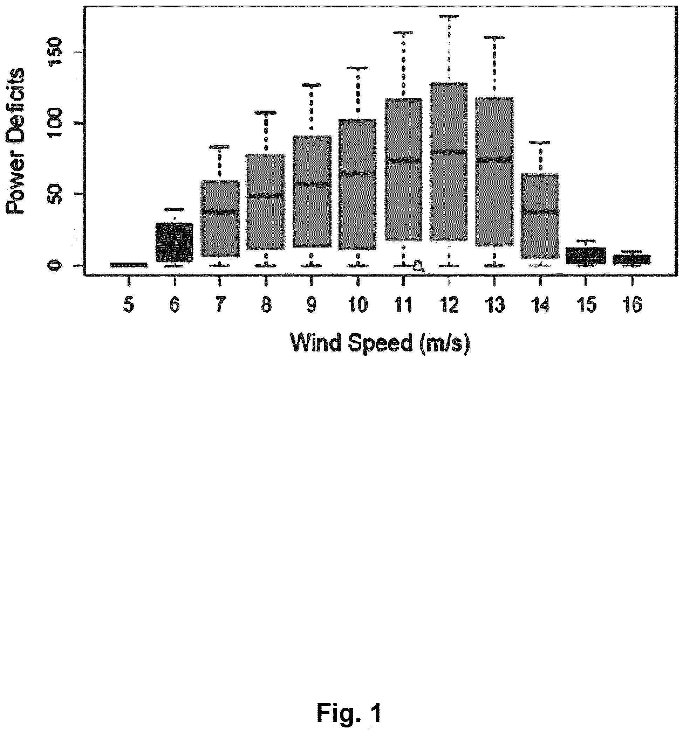

Fig. 1 illustrates a power deficit in kW as a function of wind speed in wake conditions. The graph show that wake affects wake at intermediate wind speeds. Each box has a black line showing the median power deficit for each wind speed. The power deficit (kW) for 6-14 m/s can vary between close to no power deficit to a very large power deficit. At 12 m/s the power deficit can be between ~0 kW to above 150 kW, however in most cases the power deficit is between 20-130 kW.

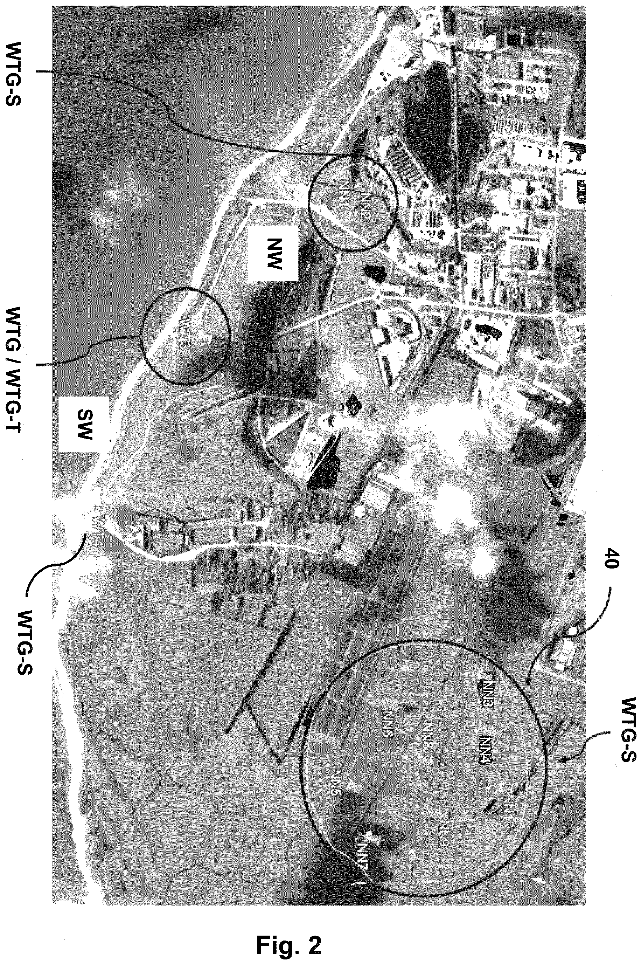

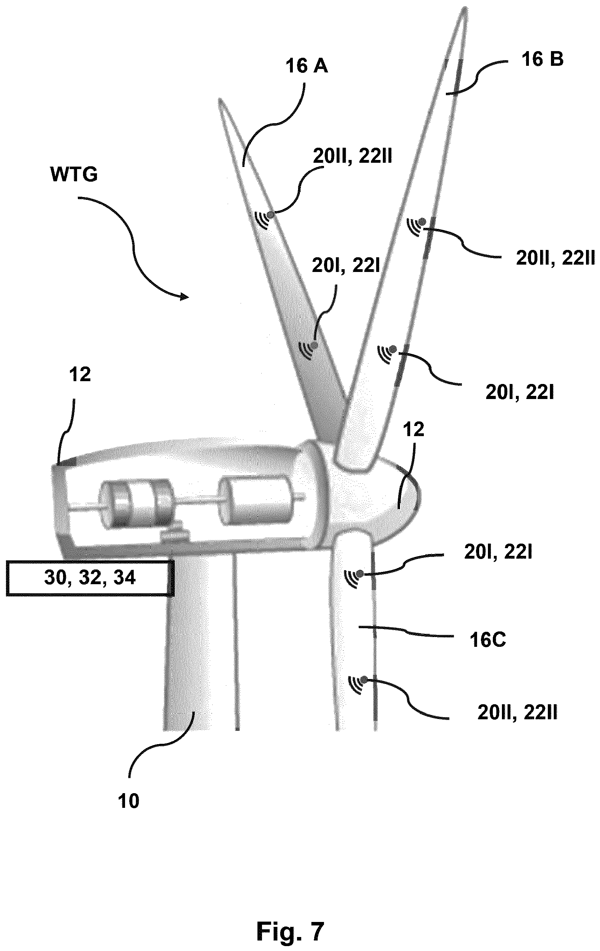

Fig. 2 illustrates a test site of a test wind turbine generator WTG, WTG-T. A test was performed where the wind turbine generator WTG was equipped with accelerometers as shown in figure 7.

The wind turbine generator WTG was further equipped with a LiDAR for proving the concept as it is well-known that a LiDAR can measure turbulence and wake in front of the wind turbine rotor.

The test wind turbine generator WTG was surrounded by several surrounding wind turbine generators, WTG-S, and a wind turbine park 40. Two wind turbine generators were positioned northwest NW of the test wind turbine generator WTG - these are also denoted NN1 and NN2.

There were no wind turbine generators (WTG) or other obstacles southeast of the test wind turbine generator WTG. Thus, wake is expected when the wind is from the northwest NW, and no wake is expected when the wind is from the southwest SW. Data was collected for a year and the result is presented in figures 3-5.

Fig. 3 illustrates one year of data from the test wind turbine generator WTG. The graph shows wake condition 90 experience by the wind turbine generator WTG-T shown in figure 2 with the numbering WT3. The y-axis discloses the rotor RPM (rounds per minute) of the wind turbine generator WTG and this correlates to the wind speed. The x-axis discloses a relative angle between the accelerometers 221, 2211. The exact value of the relative angle is not important as it also depends on the relative orientation when the blade 16 is at a standstill. In this case, the relative angle is approximately 4 when the blade 16 is at a standstill. The relative angle is based on the sensory data 80.

Each point is coloured depending on the amount of mean measured turbulence by the LiDAR at the [relative angle; WTG rotor rotations per minute]. Above 9.5 rotations per minute the wind turbine generator is less affected by the wake. Below 9.5 rotations per minute, there is a large zone marked with a circle where wake is high and the wind turbine generator is affected, there is a clear correlation with specific relative angles. Thus, it is possible to determine wake without the need for a LiDAR by measuring the relative angle between two accelerometers in combination with the WTG rotor rounds per minute or wind speed.

There is a correlation between higher wind speed and higher rotor RPM up until nominal power of the wind turbine generator WTG is reached, since the blade pitch will change the angle of the blade at higher wind speeds to prevent further increases to the power output and the rotor RPM.

Fig. 4 illustrates the data from figure 3 but only from the southwest direction (A) and the northwest direction (B).

There should be no wake from the southwest direction (A). It can be seen from the graph that the wake is low/non-existing, since the mean measured turbulence is 0.1 at the highest point, and the distribution of points is relatively slim between 7-9 rounds per minute.

There should be wake from the northwest direction (B). It can be seen from the graph that the wake can be high, since the mean measured turbulence is 0.25 at the highest point. The distribution of points is relatively wide between 7-9 rounds per minute - see the circle marking the points where the turbulence is high. This does not mean that there is no wake or turbulence, but the blades of the wind turbine generator are less affected by the present wake or turbulence and as a result less bending and/or twisting is observed. This is also the reason why the present invention is greater than using a LiDAR because the present invention determines how the wind turbine generator WTG is affected by the turbulence in the air at different wind speeds. In the prior art, the measurement by the LiDAR is followed by a guess of how the WTG is affected by the turbulence.

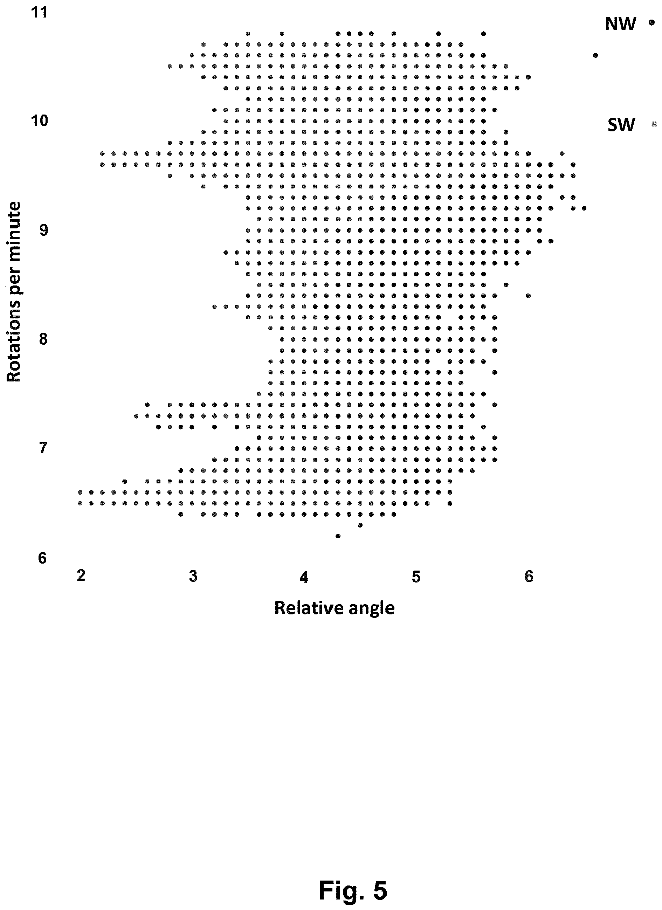

Fig. 5 illustrates points from the southwest direction (figure 4A) superimposed on the points from the northwest direction (figure 4B). Figure 5 shows that wake widens the distribution of points, which at least in part can explain the large distribution of power deficit shown in figure 1.

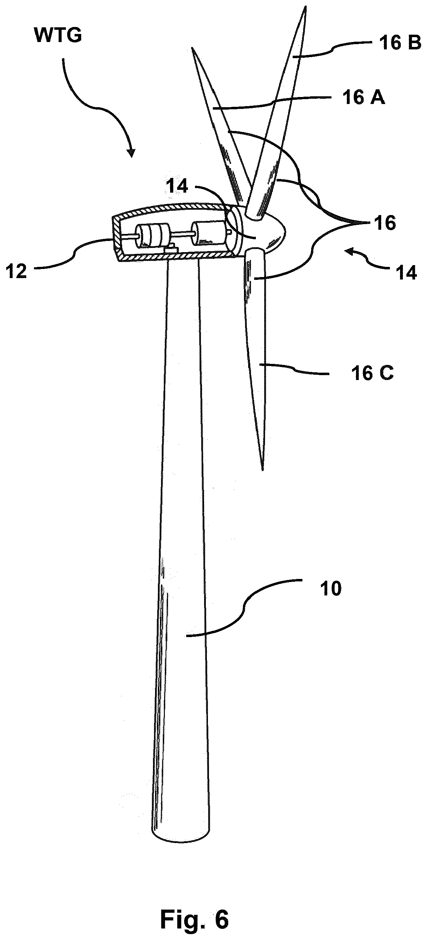

Fig. 6 illustrates a wind turbine generator WTG. The wind turbine generator WTG shown is a generic wind turbine generator WTG.

The wind turbine generator WTG comprises a tower 10 with a nacelle 12 and a rotor 14 and three blades 16, 16A, 16B, 16C extending from the rotor 14.

Fig. 7 illustrates a wind turbine generator WTG with two position sensors 201, 2011 in each of the three blades 16A, 16B, 16C.

The wind turbine generator WTG further comprises a tower 10 with a nacelle 12 and a rotor 14 and the three blades 16, 16A, 16B, 16C extend from the rotor 14.

The wind turbine generator WTG further comprises a data processing unit 30 comprising a communication module 32 for at least communication with the two positions sensors 201, 2011 in each of the three blades 16A, 16B, 16C. The communication may be wired or wireless. The data processing unit 30 further comprises a computation unit 34 adapted to execute the steps of the method 100 for determining wake conditions 90 at a wind turbine generator WTG.

The two position sensors 201, 2011 in each of the three blades 16A, 16B, 16C may comprise accelerometers 201, 2011. In some embodiments, the two positions sensors 201, 2011 may further include gyroscopes.

The two position sensors 201, 2011 are positioned radially along the blade 16A, 16B, 16C.

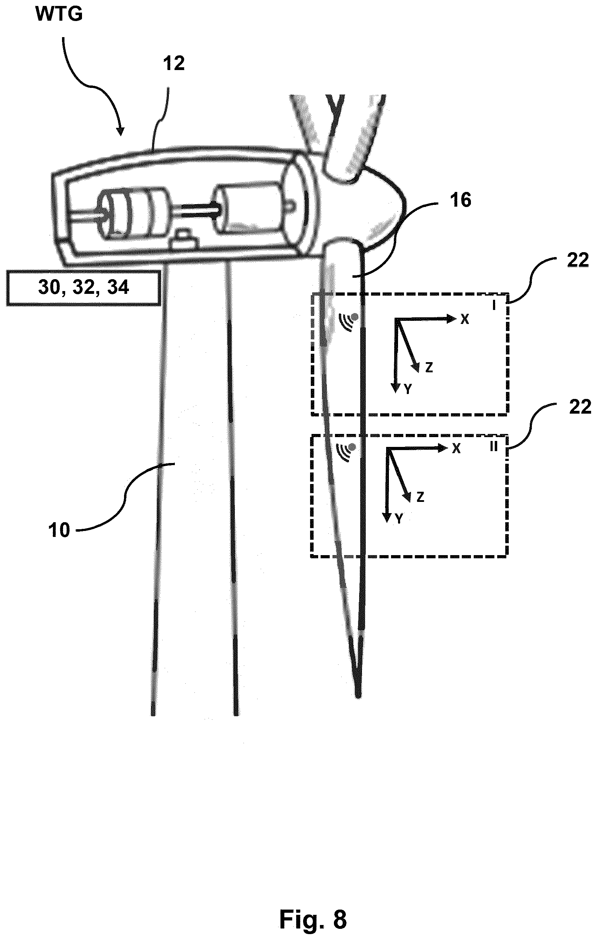

Fig. 8 illustrates a blade 16 of the wind turbine generator WTG with two tri-axis accelerometers 221, 221. The axis of each of the two tri-axis accelerometers 221, 221 does not need to be directed as shown, since the permutation between the tri-axis accelerometers 221, 221 is important for quantification of wake conditions 90. Likewise, the axes of the accelerometers 221, 221 do not need to be aligned as shown however aligning will decrease the needed computation power.

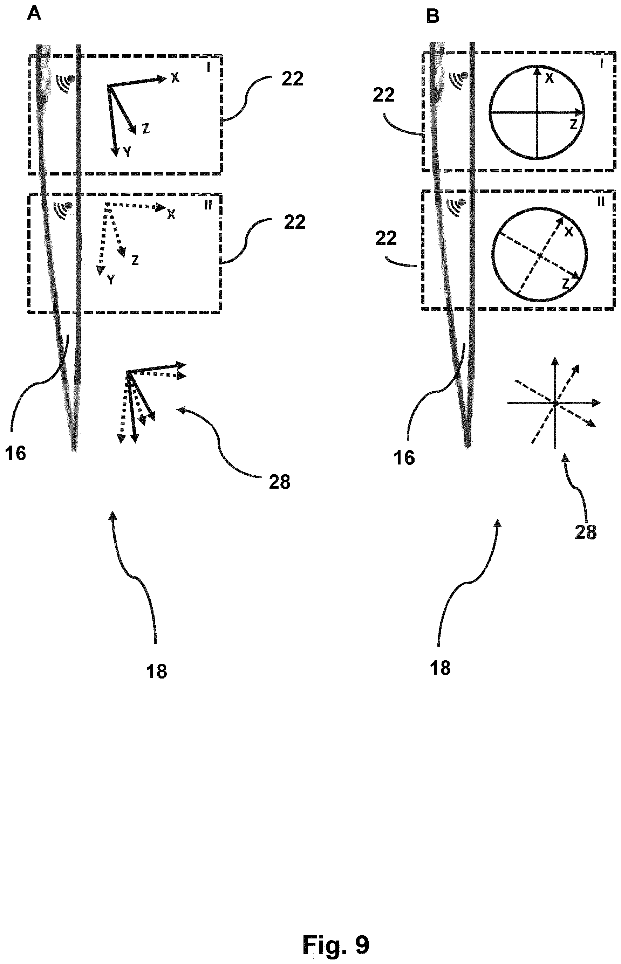

The method for determining wake conditions 100 could be performed using two two-axis accelerometers 221, 221, since two two-axis accelerometers 221, 221 would be able to measure blade behaviour 18 such as bending and/or twisting as shown in figure 9.

Fig. 9 illustrates two types of blade behaviour 18. Figure 9A shows how bending will affect the axis of each of the accelerometers 221, 221 and below the blade 16 is shown how the values can be converted to a relative point angle 28.

Figure 9A shows how twisting will affect the axis of each of the accelerometers 221, 221 and below the blade 16 is shown how the values can be converted to a relative point angle 28.

In both cases it would be sufficient to compare the angle between the XZ-planes of the accelerometers 221, 221

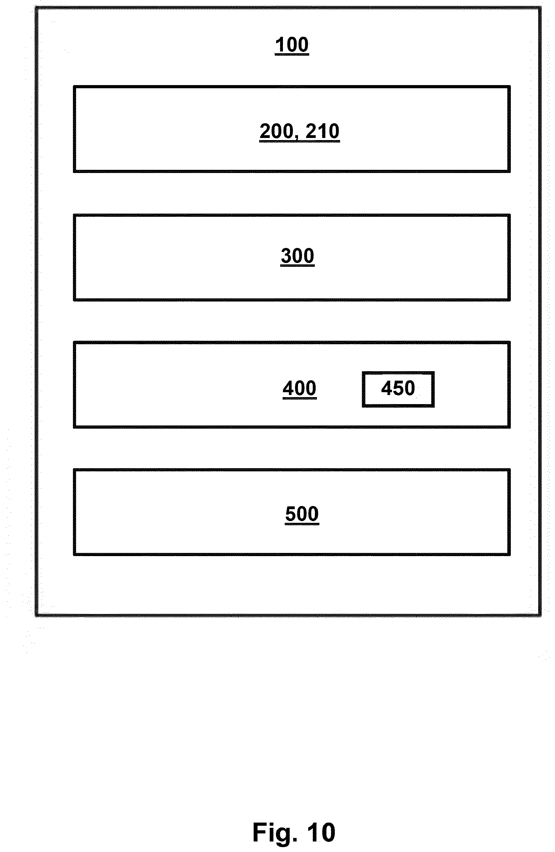

Fig. 10 illustrates a method 100 for determining wake conditions 90 at a wind turbine generator WTG.

The wind turbine generator WTG comprises a blade 16 as shown in figure 7 or 8. Said blade 16 comprises at least two position sensors 201, 2011, and the at least two position sensors 201, 2011 are positioned radially along the blade 16. The method 100 comprises steps of:
- measuring 200 sensory data 80 of the at least two position sensors 201, 2011 during operation,
- time stamping and time synchronizing 210 the sensory data 80 collected by the at least two position sensors 201, 2011;- receiving 300 a rotation speed of the wind turbine generator WTG and/or a wind speed at the wind turbine generator WTG,
- computing 400 blade behaviour 18 as a function of the at least two position sensors 201, 2011. The step of computing 400 may further be performed by an act of comparing 450 relative changes between the at least two position sensors 201, 2011.
- determining 500 wake conditions 90 at the wind turbine generator WTG as a function of the blade behaviour 18 and the rotation speed.

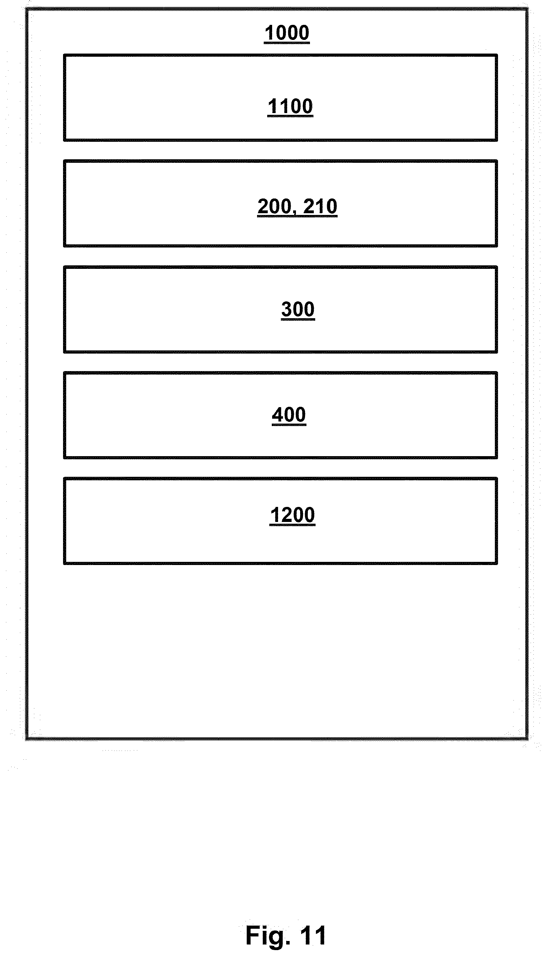

Fig. 11 illustrates a method 100 for calibrating a wake model for a wind turbine generator type WTG-T for determining wake conditions 90. The method 1000 comprises the following steps:
- providing 1100 a wind turbine generator WTG comprising
   a blade 16 comprising at least two position sensors 201, 2011, where the at least two position sensors 201, 2011 are positioned along the blade 16, and
   a LiDAR for measuring turbulence, and/or
   position data of surrounding wind turbine generators WTG-S;
- measuring 200 sensory data 80 of the at least two position sensors 201, 2011 during operation,
- measuring 200 turbulence using the LiDAR during operation and/or measuring wind at the wind turbine generator WTG,
- determining 300 a rotation speed of the wind turbine generator WTG,
- computing 400 a blade behaviour 18 as a function of the at least two position sensors 201, 2011,
- calibrating 1200 a wake model for calculating wake conditions of the wind turbine generator WTG as a function of the blade behaviour 18, the rotation speed and the measured turbulence and/or the wind direction coupled to the position data of the surrounding wind turbine generators WTG-S.

Fig. 12 illustrates a measured acceleration signal after a crack 24 in a blade for a wind turbine generator. The measured acceleration signal could be measured using a system as shown in figure 7 and/or 8. The crack 24 creates a large peak value, which is easy to identify.

The first graph shows 1 minute, and the second graph shows 1.2 seconds. The accelerometer was a two-axis accelerometer, and the large signal was measured along both axes. The signal from the crack could have been detected by a single axis accelerometer.

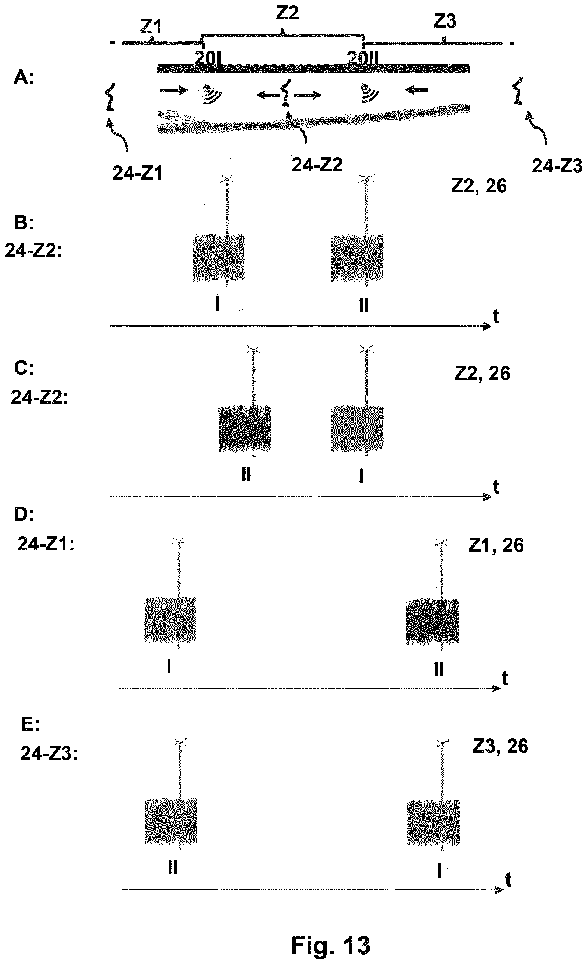

Fig. 13 illustrates different kinds of possible signals when a crack 24 occurs. Figure 13A show a blade 16 divided into three zones (Z1, Z2, Z3) by the two position sensors 201, 2011 which may comprise accelerometers 221, 2211.

The two position sensors 201, 2011 enable to at least identify an area of crack origin 26, which is equal to or smaller than the three zones (Z1, Z2, Z3). This will be described with reference to figures 13B-13E.

In 13B, a crack 24-Z2 occurs in zone Z2, where the crack 24-Z2 is closer to the position sensor 201 than the position sensor 2011, and as a result, a signal will be measured on position sensor 201 before position sensor 2011.

In 13C, a crack 24-Z2 occurs in zone Z2, where the crack 24-Z2 is closer to the position sensor 2011 than the position sensor 201, and as a result, a signal will be measured on position sensor 2011 before position sensor 201.

In the case of 13B and 13C, the area of crack origin 26 can be reduced further than Z2, since the time the two peaks will depend on the cracks 24 relative position to the two position sensors 201, 2011. In case that the wave propagation speed of the blade 16 is known then the area of crack origin 26 can be reduced even further.

In 13D, a crack 24-Z1 occurs in zone Z1, where the crack 24-Z1 is closer to the position sensor 2011 than the position sensor 2011, and as a result, a signal will be measured on position sensor 201 before position sensor 2011.

In 13E, a crack 24-Z3 occurs in zone Z3, where the crack 24-Z3 is closer to the position sensor 2011 than the position sensor 201, and as a result, a signal will be measured on position sensor 2011 before position sensor 201.

In the case of 13D and 13E, the area of crack origin 26 can be reduced further than Z1 or Z3 since the time between measured signals depends on the distance between the two position sensors 201,2011 and the wave propagation speed through the blade 16. However, the measurement can be used to calculate the wave propagation speed if the radial distance between the position sensors 201,2011 are known.

This is also why the blade 16 may be equipped with several position sensors 20 such as several accelerometers 22.

Fig. 14 illustrates a wind turbine generator WTG with blade 16 failure. A system as shown in figures 7, 8 and 13 would have been able to identify cracks 24 prior to the blade 16 breaking apart. The shown image is taken from an article about a GE wind turbine generator WTG. The article is from January 2022, see link https://www.re-chargenews.com/wind/new-failure-for-flagship-ge-wind-turbine-as-cypress-blade-breaks-in-germany/2-1-1138840.

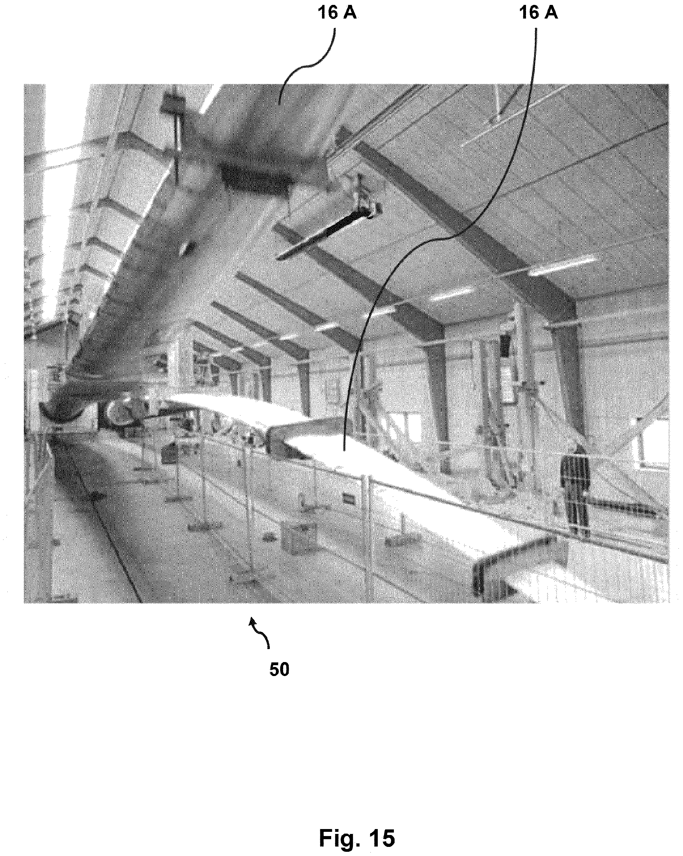

Fig. 15 illustrates an example of a test rig 50 for blades 16. The solution shown in figure 13 can be used during testing of blades 16 such that it becomes easier to identify cracks 24, thereby the severity of the crack 24 can easily be examined using ultrasound.

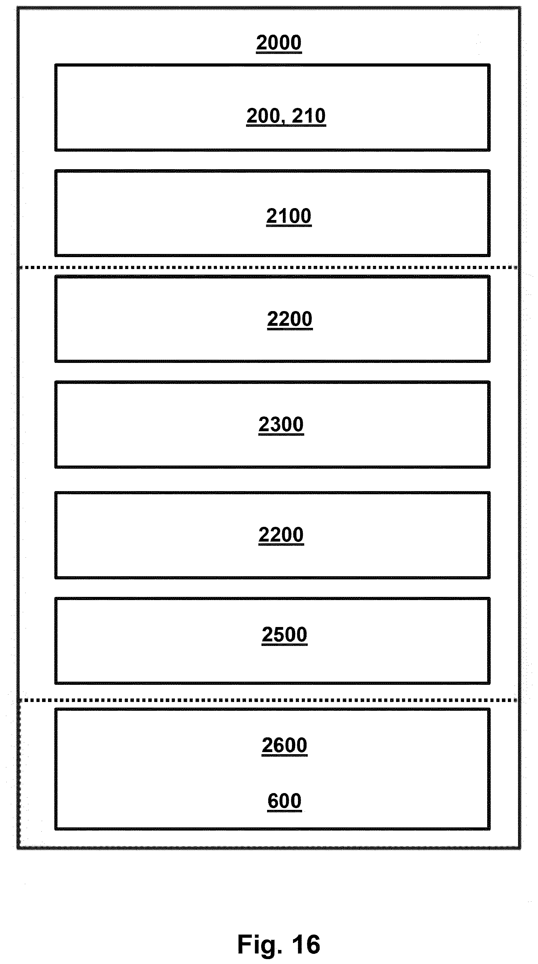

Fig. 16 illustrates a method 2000 for identifying a blade crack 24 in a blade 16 for a wind turbine generator WTG, the method 2000 comprises at least steps of
- measuring 200 sensory data 80 of at least one position sensor 20 positioned radially along the blade (16);
- identifying 2100 blade cracks (24) using the sensory data (80).

Thereby the sensory data 80 can be used to identifying 2100 blade cracks, however it will not be possible to determine a area of crack origin unless two or more position sensors 20 are used.

Thus, method 2000 may be modified to be a method for estimating an area of crack origin 26, if the blade 16 comprises at least two position sensors 201, 2011 positioned radially along the blade 16. The method 2000 comprises a step of
- time stamping and time synchronizing 210 the sensory data 80 collected by the at least two position sensors 16;
- estimating 2200 an area of crack origin 26, where the blade crack 24 happened, as a function of the sensory data 80.

The method 2000 may further comprise steps of
- repeatably storing 2300 a timestamp of the blade crack 24, the area of crack origin 26 of the blade crack 24 and the sensory data 80 of the blade crack 24, thereby forming a blade crack sequence;
- estimating 2200 the blade crack sequence relative to one or more threshold values; and
- sending 2500 an alarm as a function of the step of estimating 2200.

The alarm may be sent based on threshold values set by an operator such as rate of blade cracks 24, and/or area of crack origin 26, and/or measured wake conditions at the time of blade crack 24, and/or wind speed at time of the blade crack 24 and/or amplitude of the blade crack 24 or change in amplitude between two blade cracks 24.

The method 2000 may further comprise the following steps for calculating 500 the wave propagation speed through the blade 16. The method may comprise a step of tapping 2600 the blade 16 whilst measuring 200 sensory data 80 of at least two position sensors 20 positioned radially along the blade 16, and a step of time stamping and time synchronizing 200 the sensory data 80 collected by the at least two position sensors 20, and a step of calculating 500 a wave propagation speed through the blade 16 as a function of the sensory data 80 from the step of tapping 2600.

This enables the method for utilising wave propagation speed. Thus, the step of estimating 2200 an area of crack origin 26 can be performed including the wave propagation speed.

## Claims

1. A method (2000) for identifying a blade crack (24) in a blade (16) for a wind turbine generator (WTG), the method (2000) comprises steps of
- measuring (200) sensory data (80) of at least one position sensor (20) positioned radially along the blade (16);
- identifying (2100) blade cracks (24) using the sensory data (80).

2. A method (2000) according to claim 1 for estimating an area of crack origin (26), wherein the blade (16) comprises at least two position sensors (201, 2011) positioned radially along the blade (16) and the method (2000) comprises a step of
- time stamping and time synchronizing (210) the sensory data (80) collected by the at least two position sensors (16);
- estimating (2200) an area of crack origin (26), where the blade crack (24) happened, as a function of the sensory data (80).

3. A method (2000) according to claim 2, wherein the method (2000) comprises steps of
- repeatably storing (2300) a timestamp of the blade crack (24), the area of crack origin (26) of the blade crack (24) and the sensory data (80) of the blade crack (24), thereby forming a blade crack sequence;
- estimating (2200) the blade crack sequence relative to one or more threshold values; and
- sending (2500) an alarm as a function of the step of estimating (2200).

4. A method (2000) according to any one of claims 1 to 3, wherein the method (2000) is performed while a blade test rig (50) performs steps of mechanically stressing the blade (16).

5. A method (2000) according to any one of claims 1 to 4, wherein the method (2000) is performed on a wind turbine generator (WTG) comprising the blade (16) during operation.

6. A method (2000) according to any one of claims 1 to 5, wherein the at least one or two position sensors (201, 2011) comprise at least one or two accelerometers (221, 2211).

7. A method (2000) according to any one of claims 1 to 6, wherein the at least one or two accelerometers (221, 2211) comprise a sampling rate equal to or above 256 Hz, or equal to or above 512 Hz, or equal to or above 1 kHz, or equal to or above 2 kHz, or equal to or above 4 kHz, or equal to or above 8 kHz.

8. A method (2000) according to any one of claims 1 to 7, wherein the method further comprises steps of
- tapping (2600) the blade (16) whilst measuring (200) sensory data (80) of at least two position sensors (20) positioned radially along the blade (16);
- time stamping and time synchronizing the sensory data (80) collected by the at least two position sensors (20);- calculating (500) a wave propagation speed through the blade (16) as a function of location of the tapping, radial position of the position sensors (20) along the blade (16) and the sensory data (80) from the step of tapping (2600), wherein the step of estimating (2200) an area of crack origin (26) being further a function of the wave propagation speed.

9. A data processing unit (30) for localising a blade crack (24) in a blade (16) for a wind turbine generator (WTG), the control system (30) comprising
- a communication module (32) adapted for communication with at least one or two position sensors (201, 2011) and the at least one or two position sensors (201, 2011) are positioned radially along a blade (16),
- a computation unit (34) adapted to execute the steps of the method according to any one of claims 1 to 8.

10. The data processing unit (30) according to claim 9, wherein the communication module (32) is in wireless or wired communication with at least one or two position sensors (201, 2011).

11. The data processing unit (30) according to claim 9 or 10, wherein the data processing unit (30) is configured to send a stop signal or an alarm to a wind turbine generator (WTG) or test rig or an operator or a service team as a function of blade cracks (24).

12. A wind turbine generator (WTG) comprising
- a blade (16) comprising at least one or two position sensors (201, 2011), where the at least two position sensors (201, 2011) are positioned radially along the blade (16),
- a data processing unit (30) according to any one of claims 9 to 11.

13. A wind turbine farm comprises a plurality of wind turbine generators, wherein a plurality of blades (16) of the plurality of wind turbine generators comprises at least one or two position sensors (201, 2011), where the at least one or two position sensors (201, 2011) are positioned radially along the blade (16), and the wind turbine farm further comprises a data processing unit (30) according to any one of claims 9 to 12, the data processing unit (30) being in communication with the position sensors (20) on the plurality of blades (16).
